# EUROPEAN PATENT APPLICATION

(11) **EP 4 002 561 A2**
(43) Date of publication of application: **25.05.2022**
(21) Application number: 21208991.6
(22) Date of filing: 18.11.2021
(51) Int. Cl.: H01M 50/107, H01M 50/109, H01M 50/152, H01M 50/153, H01M 50/16, H01M 50/166

(54) **RECHARGEABLE BATTERY**

(30) Priority: 18.11.2020 KR 20200154872
(71) Applicant: Samsung SDI Co., Ltd., Yongin-si, Gyeonggi-do 17084 (KR)
(72) Inventor: Moon, Jinyoung, 17084 Yongin-si, Gyeonggi-do (KR); Chun, Byoungmin, 17084 Yongin-si, Gyeonggi-do (KR); Lee, Jong-Ha, 17084 Yongin-si, Gyeonggi-do (KR); Kim, Shinjung, 17084 Yongin-si, Gyeonggi-do (KR)
(74) Representative: Gulde & Partner

(57) **Abstract**

The present disclosure relates to a rechargeable battery used with other types of rechargeable batteries in a set. The rechargeable battery includes: a case receiving an electrode assembly and including an opening; a cap assembly including a cap plate combined to the case and covering the opening and a terminal plate combined to the cap plate; and a housing member covering the cap plate on an external side of the terminal plate and combined to the case, wherein the housing member includes an undercut formed toward an external surface of the case.

## Description

### BACKGROUND OF THE INVENTION

### (a) Field of the Invention

The present invention relates to a rechargeable battery. More particularly, the present invention relates to a very small rechargeable battery to be used together with another type of rechargeable battery in a set.

### (b) Description of the Related Art

Unlike a primary battery, a rechargeable battery can be repeatedly recharged and discharged. A small-capacity rechargeable battery is used for small portable electronic devices such as mobile phones, notebook computers, camcorders, and the like, while a large-capacity rechargeable battery is used as a motor-driving power source for a hybrid vehicle.

As typical rechargeable batteries, there are a nickel-cadmium (Ni-Cd) battery, a nickel-metal hydride (Ni-MH) battery, a lithium (Li) battery, a lithium ion (Li-ion) battery, etc. Particularly, the lithium ion rechargeable battery has an operating voltage about thrice as high as that of the Ni-Cd battery or Ni-MH battery that is widely used as a power supply for electronic devices. In addition, the lithium ion rechargeable battery has been widely used because its energy density per unit weight is high.

Particularly, as demands on wearable devices such as headphones, earphones, smartwatches, and medical devices attachable to bodies and using Bluetooth are recently increasing, needs of very small rechargeable batteries with high energy density are increasing.

It is important for the very small rechargeable batteries to obtain electrical capacity required within a restricted size, increase efficient weight reduction, realize an efficient structure, and increase structural stability.

The matters described as the background art are only for the purpose of increasing the understanding of the background of the present invention, and should not be taken as acknowledging that they correspond to the related art already known to those skilled in the art.

The above information disclosed in this Background section is only for enhancement of understanding of the background of the invention, and therefore it may contain information that does not form the prior art that is already known in this country to a person of ordinary skill in the art.

### SUMMARY OF THE INVENTION

The present invention has been made in an effort to provide a rechargeable battery to be used together with another type of rechargeable battery in a set.

An embodiment of the present invention provides a rechargeable battery including: a case receiving an electrode assembly and including an opening; a cap assembly including a cap plate combined to the case and covering the opening and a terminal plate combined to the cap plate; and a housing member covering the cap plate on an external side of the terminal plate and combined to the case, wherein the housing member includes an undercut formed toward an external surface of the case.

The undercut may be formed in an internal side of a lateral portion of the housing member.

The housing member may include a planar portion and a lateral portion. The planar portion may cover an exposed side of the cap plate and the lateral portion may extend along a lateral side of the case from planar portion. The undercut may become gradually thicker while going to a lower end of an internal side of the housing member from an upper end thereof.

The terms "upper" and "lower" are used with reference to the cap assembly.

That is, for example, the "upper end" is an end close to the cap assembly and the "lower end" refers to the opposite end to the upper end.

The case is provided with a combining groove corresponding to the undercut on an external surface.

The combining groove may become gradually deeper while going to a lower end of the external surface of the case from an upper end thereof.

The undercut may become plural while going to the lower end of the internal side of the housing member from the upper end thereof.

An upper undercut from among a plurality of undercuts may form a first slope on a lower side from a maximum protruding line and may form a second slope on an upper side from the maximum protruding line, and the first slope may be formed to be gentler than the second slope.

The case may be provided with a plurality of combining grooves corresponding to a plurality of undercuts on the external surface.

An upper combining groove from among the combining grooves may have a depth corresponding to the first slope and the second slope of the upper undercut on the external surface of the case.

A lower undercut from among a plurality of undercuts may form a third slope on a lower side from the maximum protruding line and may form a fourth slope on an upper side from the maximum protruding line, the third slope may be formed to be steeper than the first slope and gentler than the second slope, and the fourth slope may be formed to be steeper than the third slope and gentler than the first slope.

A lower combining groove from among the combining grooves may provide a depth corresponding to the third slope and the fourth slope of the lower undercut on the external surface of the case.

The electrode assembly may include a first electrode, a second electrode, and a separator disposed therebetween, the case may be connected to the first electrode by a first electrode tab, and the terminal plate may be connected to the second electrode by a second electrode tab.

The cap plate may be electrically connected to the case, and the cap plate and the terminal plate may be thermally fused by a thermally fused member disposed therebetween and may be electrically insulated from each other.

The terminal plate may include: a flange portion disposed outside the cap plate and attached to an external surface of the cap plate in an electrically insulated way; and a protrusion end protruding to an inside from the flange portion, inserted into a terminal hole of the cap plate, and electrically connected to the second electrode tab on an internal surface.

The rechargeable battery according to an embodiment of the present invention combines the housing member in which the undercut is installed to the external side of the case, so it may be used together with other types of rechargeable batteries.

### BRIEF DESCRIPTION OF THE DRAWINGS

FIG. 1 shows a perspective view of a rechargeable battery according to a first embodiment of the present invention.
FIG. 2 shows an exploded perspective view of a rechargeable battery shown in FIG. 1.
FIG. 3 shows a cross-sectional view with respect to a line III-III of FIG. 1.
FIG. 4 shows a partial cross-sectional view of a housing member applied to a first embodiment.
FIG. 5 shows a partial cross-sectional view of an enlarged state in which a housing member of FIG. 4 is combined to a case.
FIG. 6 shows a partial cross-sectional view of an enlarged state in which a housing member is combined to a case in a rechargeable battery according to a second embodiment of the present invention.
FIG. 7 shows a partial cross-sectional view of a housing member applied to a third embodiment.
FIG. 8 shows a partial cross-sectional view of an enlarged state in which a housing member of FIG. 7 is combined to a case.
FIG. 9 shows a partial cross-sectional view of an enlarged state in which a housing member is combined to a case in a rechargeable battery according to a fourth embodiment of the present invention.

### DETAILED DESCRIPTION OF THE EMBODIMENTS

The present invention will be described more fully hereinafter with reference to the accompanying drawings, in which embodiments of the invention are shown. As those skilled in the art would realize, the described embodiments may be modified in various different ways, all without departing from the scope of the present invention. The drawings and description are to be regarded as illustrative in nature and not restrictive. Like reference numerals designate like elements throughout the specification.

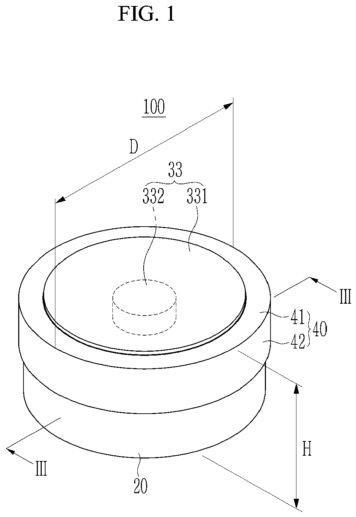

The rechargeable battery according to an embodiment of the present invention is a very small battery, and it may be a coin cell or a button cell. The coin cell or the button cell is a battery in a thin coin shape or a button shape, and it represents the battery of which a ratio (H/D) of a height (H) vs. a battery diameter (D) is equal to or less than 1 (refer to FIG. 1).

The coin cell or the button cell is generally cylindrical, so the cross-section in a horizontal direction is circular, and without being limited, may also be oval or polygonal. In this instance, the diameter is set to be a maximum distance of an exterior circumference of the housing (or the case) with reference to the horizontal direction of the battery, and the height is set to be a maximum distance (the distance to a flat uppermost side from a flat ground side) with reference to a vertical direction of the battery.

However, the coin cell or the button cell is an example of the present invention, and without being limited thereto, the present invention may be a cylindrical battery or a pin-type battery. A case in which the rechargeable battery according to an embodiment of the present invention is a coin cell or a button cell will now be exemplarily described in detail.

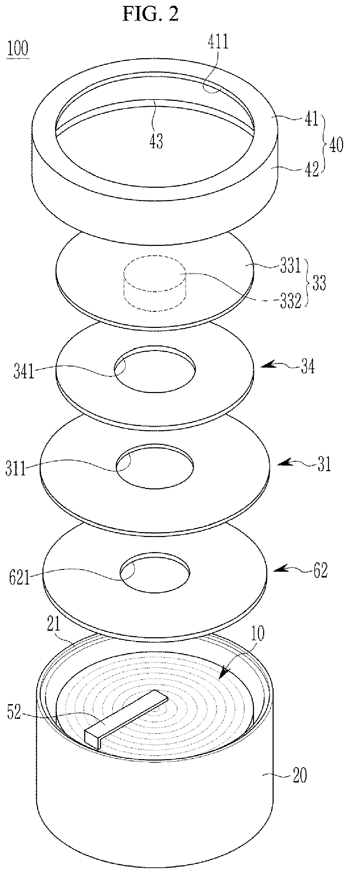

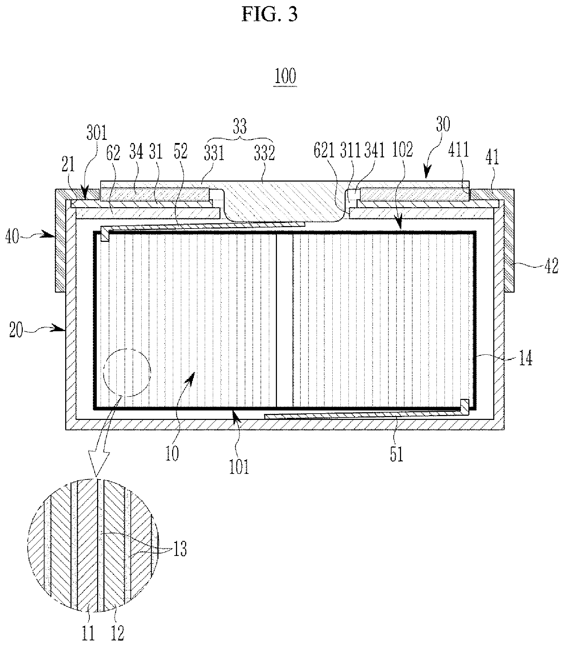

FIG. 1 shows a perspective view of a rechargeable battery according to a first embodiment of the present invention, FIG. 2 shows an exploded perspective view of a rechargeable battery shown in FIG. 1, and FIG. 3 shows a cross-sectional view with respect to a line III-III of FIG. 1.

Referring to FIG. 1 to FIG. 3, the rechargeable battery 100 according to a first embodiment includes an electrode assembly 10, a case 20, a cap assembly 30, and a housing member 40. The cap assembly 30 includes a cap plate 31 and a terminal plate 33 combined to each other. For example, the cap plate 31 and the terminal plate 33 are thermally fused by a thermally fused member 34 disposed therebetween.

The thermally fused member 34 functions to combine the cap plate 31 and the terminal plate 33. For example, the thermally fused member 34 may be made of an electrically insulating material such as polymers, and may be melted by using laser beams and may be fused on the cap plate 31 and the terminal plate 33.

In the first embodiment, the terminal plate 33 is combined to the cap plate 31 by the thermally fused member 34, so without adding an individual insulating element, a stable combined structure may be provided while efficiently insulating the terminal plate 33 from the cap plate 31.

The coin cell may be manufactured to be very small, so it may have a limit in design in the viewpoint of space, and there is a need to simplify the configuration and the manufacturing process and obtain functionality. In the first embodiment, insulation and combination between the terminal plate 33 and the cap plate 31 are performed by the thermally fused member 34.

The electrode assembly 10 includes a first electrode (11, for example, a negative electrode) and a second electrode (12, for example, a positive electrode) installed on respective sides of a separator 13 that is an electrical insulator, and is formed by wounding a first electrode 11, the separator 13, and the second electrode 12. Therefore, the electrode assembly 10 may be formed in a jelly roll type. Although not shown, the electrode assembly may also be formed in a stack type.

The electrode assembly 10 is configured to be charged and discharged with a current, and a winding axis may be arranged in parallel to a height direction (a top to bottom direction in FIG. 1 to FIG. 3) of the case 20 in the electrode assembly 10. A first end (a lower end side of the electrode assembly) 101 and a second end (an upper end side of the electrode assembly) 102 of the electrode assembly 10 may be flat and may be parallel to each other. In the first embodiment, the electrode assembly 10 does not include a center pin but may include a center pin (not shown) at the position of the winding axis

The case 20 faces the first end 101 of the electrode assembly 10 and receives the electrode assembly 10. The electrode assembly 10 is coated with an insulating sheet 14 and is installed in the case 20. For example, the case 20 is formed to be a cylinder for receiving the jelly roll type of electrode assembly 10, and the cap assembly 30 closes and seals an opening 21 of the cylindrical case 20.

The electrode assembly 10 includes a first electrode tab 51 connected to the first electrode 11 and a second electrode tab 52 connected to the second electrode 12, and draws the first and second electrodes 11 and 12 out to the first and second ends 101 and 102.

While the electrode assembly 10 is received in the case 20, the first electrode tab 51 is electrically connected to a bottom of the case 20, and the second electrode tab 52 is electrically connected to the terminal plate 33 of the cap assembly 30.

The cap plate 31 of the cap assembly 30 faces the second end 102 of the electrode assembly 10 and is combined to the case 20 to cover the opening 21. The terminal plate 33 is, while combined to the cap plate 31 by the thermally fused member 34, connected to the second electrode tab 52.

A case in which the first electrode 11 and the second electrode 12 are respectively a negative electrode and a positive electrode will now be exemplified, and without being limited thereto, the first electrode 11 and the second electrode 12 may respectively be a positive electrode and a negative electrode.

The first electrode (or the negative electrode) 11 has a long strip shape, and includes a negative coated region generated by applying a negative active material layer to a current collector of a metal film (e.g., a foil of Cu) and a negative uncoated region to which no active material is applied. The negative uncoated region may be positioned on one end in a length direction of the negative electrode.

The second electrode (or the positive electrode) 12 has a long strip shape, and includes a positive coated region generated by applying a positive active material layer to a current collector of a metal film (e.g., a foil of Al) and a positive uncoated region to which no active material is applied. The positive uncoated region may be positioned on one end in a length direction of the positive electrode.

The case 20 allows the electrode assembly 10 to be inserted into the opening 21 formed in one side, and has a space for receiving the electrode assembly 10 and an electrolyte solution. For example, the case 20 is formed to have a cylindrical shape with a lower height (H) than the battery diameter (D), and forms a circular opening 21 into which the cylindrical electrode assembly 10 corresponding to an internal space may be inserted.

Regarding the cap assembly 30, the terminal plate 33 includes a flange portion 331 and a tab connector 332. The flange portion 331 is disposed outside the cap plate 31 and is electrically attached to the external surface of the cap plate 31 in an insulated way.

The tab connector 332 protrudes to the inside from the flange portion 331 and is inserted into a through-hole 341 of the thermally fused member 34 and a terminal hole 311 of the cap plate 31, and an internal surface of the tab connector 332 is electrically connected to the second electrode tab 52.

When assembling the rechargeable battery 100 according to a first embodiment, the housing member 40 allows the rechargeable battery 100 to be used together with other types of rechargeable batteries. For example, the housing member 40 is made of an insulating material of polymers, and may be formed of a polybutylene terephthalate (PBT), a polypropylene (PP), a polyethylene (PE), a polystyrene (PS), or an acrylonitrile butadiene styrene (ABS).

The housing member 40 covers the cap plate 31 and is combined to the case 20 outside the terminal plate 33. The housing member 40 includes an undercut 43 protruding toward an external surface of the case 20.

The housing member 40 includes a planar portion 41 and a lateral portion 42. The planar portion 41 includes a through-hole 411 corresponding to the flange portion 331 to expose the flange portion 331 of the terminal plate 33 and cover an exposed side 301 of the external surface of the cap plate 31. The lateral portion 42 extends along a lateral side of the case 20 from the outside of the planar portion 41 to cover a portion of the lateral side of the case 20 and be combined to the lateral side of the case 20. A portion combined to the housing member 40 extends in the rechargeable battery 100, so the rechargeable battery 100 may be used together with other types of rechargeable batteries.

An insulating member 62 disposed on the exterior circumference of the tab connector 332 is installed on an internal surface of the cap plate 31. The insulating member 62 may configure an electrical insulating structure between the cap plate 31 and the second electrode tab 52 and between the cap plate 31 and the electrode assembly 10.

The insulating member 62 includes a through-hole 621 corresponding to the terminal hole 311 of the cap plate 31. The through-hole 621 connects the second electrode tab 52 to the internal surface of the tab connector 332. The through-hole 621 is made with a diameter that is less than that of the terminal hole 311 and prevents the second electrode tab 52 from contacting the cap plate 31.

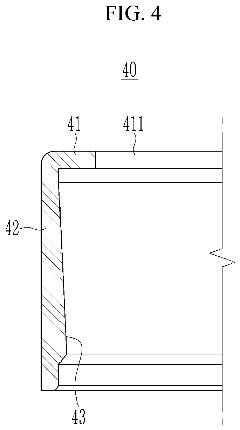

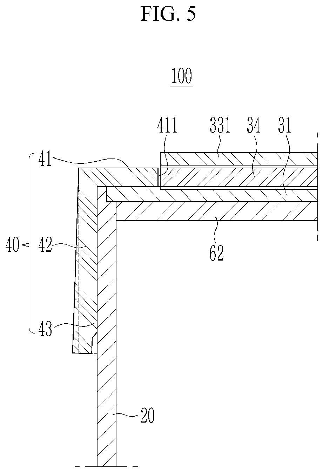

FIG. 4 shows a partial cross-sectional view of a housing member applied to a first embodiment, and FIG. 5 shows a partial cross-sectional view of an enlarged state in which a housing member of FIG. 4 is combined to a case. Referring to FIG. 4 and FIG. 5, the undercut 43 increases a fastening force by which the housing member 40 is combined to the external surface of the case 20.

The undercut 43 becomes gradually thicker while going to a lower end of the internal side from an upper end thereof on the lateral portion 42 of the housing member 40. That is, the lateral portion 42 is made of a cylinder with the same thickness, and the undercut 43 is made on the internal side with a variable thickness.

In a first embodiment, the undercut 43 is continuously formed in a circumference direction on the internal side of the lateral portion 42, and it may be intermittently formed in the circumference direction (not shown).

When the housing member 40 is combined to the case 20 on the side of the cap plate 31 of the rechargeable battery 100, the lateral portion 42 of the housing member 40 is firmly and tightly combined to the external surface of the case 20 through the undercut 43.

As shown in FIG. 5, as the housing member 40 is made of a polymer material, the lateral portion 42 may be elastically operable by the undercut 43. That is, the housing member 40 may be elastically combined to the case 20 through the undercut 43.

When the undercut 43 is partially transformed, the fastening force between the housing member 40 and the case 20 may be appropriately adjusted or a mutual fastening force may be further increased.

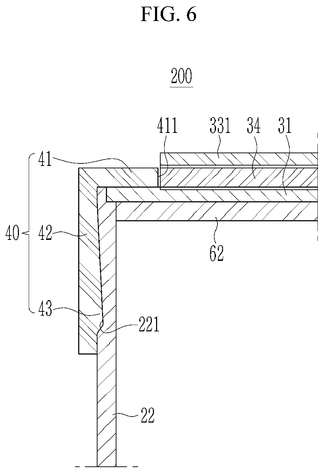

FIG. 6 shows a partial cross-sectional view of an enlarged state in which a housing member is combined to a case in a rechargeable battery according to a second embodiment of the present invention. Referring to FIG. 4 and FIG. 6, regarding a rechargeable battery 200 according to a second embodiment, the case 22 includes a combining groove 221 corresponding to the undercut 43 on the external surface.

The combining groove 221 is formed to be gradually deeper as the direction goes to the lower end of the external surface of the case 22 from the upper end thereof. That is, the combining groove 221 is formed corresponding to the structure of the undercut 43 that becomes gradually thicker while going to the lower end of the internal side from the upper end thereof on the lateral portion 42 of the housing member 40.

Therefore, the undercut 43 may be easily combined with the combining groove 221. The combination of the undercut 43 and the combining groove 221 may further increase the fastening force of the lateral portion 42 of the housing member 40 and the case 22 compared to the first embodiment. When the rechargeable battery 200 is inserted into the set, a phenomenon that the housing member 40 is separated from the case 22 may be further prevented compared to the first embodiment. The rechargeable battery 200 according to a first embodiment may be used together with other types of rechargeable batteries.

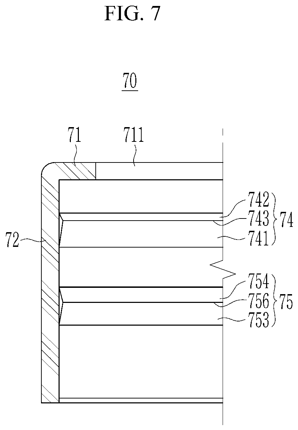

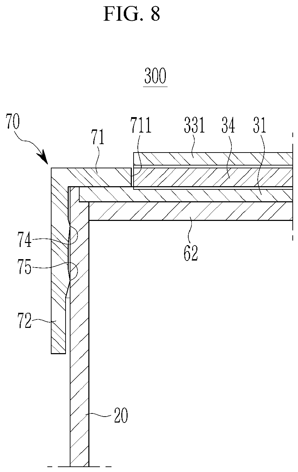

FIG. 7 shows a partial cross-sectional view of a housing member applied to a third embodiment, and FIG. 8 shows a partial cross-sectional view of an enlarged state in which a housing member of FIG. 7 is combined to a case. Referring to FIG. 7 and FIG. 8, in the rechargeable battery 300 according to a third embodiment, undercuts 74 and 75 may be formed in a lower end of the internal side of a lateral portion 72 of a housing member 70.

For example, the undercuts 74 and 75 may include an upper undercut 74 and a lower undercut 75. The upper undercut 74 forms a first slope 741 toward the lower side from a maximum protruding line 743 protruding to a center of the housing member 70, and forms a second slope 742 toward the upper side from the maximum protruding line 743. The first slope 741 may be formed to be gentler than the second slope 742. The maximum protruding lines 743 is a portion of the upper undercut 74 protruding maximally from the internal side of the lateral portion 72 toward the case 20.

The lower undercut 75 forms a third slope 753 toward the lower side from a maximum protruding line 756 protruding to the center of the housing member 70, and forms a fourth slope 754 toward the upper side from the maximum protruding line 756. The maximum protruding lines 756 is a portion of the lower undercut 75 protruding maximally from the internal side of the lateral portion 72 toward the case 20. The maximum protruding lines 743 and 756 protrude to the center from the internal side of the lateral portion 72 with the same height on the upper and lower undercuts 74 and 75.

The lowest third slope 753 is steeper than the first slope 741 and is gentler than the highest second slope 742. The fourth slope 754 is steeper than the third slope 753 on the lower side and is gentler than the first slope 741 on the upper side. That is, the steepest second slope 742, the fourth slope 754, the third slope 753, and the gentlest first slope 741 are formed in order.

Referring to FIG. 8, when the housing member 70 is combined to the case 20 on the side of the cap plate 31 of the rechargeable battery 300 through a through-hole 711, a planar portion 71 exposes and covers the flange portion 331 of the terminal plate 33, and the lateral portion 72 of the housing member 70 is firmly and closely combined to the external surface of the case 20 through the upper and lower undercuts 74 and 75. The upper and lower undercuts 74 and 75 of the lateral portion 72 may be combined to the case 20.

During the combination process, the third and first slopes 753 and 741 are formed to be gentler than the fourth and second slopes 754 and 742 to thus ease the combination of the case 20 and the housing member 70. In the maintaining state after the combination, the fourth and second slopes 754 and 742 formed to be steeper than the third and first slopes 753 and 741 may more efficiently prevent separation and digression of the case 20 and the housing member 70.

During the combination process, the structure in which the first slope 741 is formed to be gentler than the third slope 753 prevents the case 20 inserted into the third slope 753 from being inserted by the first slope 741.

In the maintaining state after the combination, the structure in which the second slope 742 is formed to be steeper than fourth slope 754 prevents the inserted case 20 from being separated from and leaving the second slope 742.

As the housing member 70 is made of a polymer material, the lateral portion 72 may be elastically operable to the case 20 by the upper and lower undercuts 74 and 75. That is, the housing member 70 may be elastically combined to the case 20 through the upper and lower undercuts 74 and 75.

When the upper and lower undercuts 74 and 75 are partially transformed, the fastening force of the housing member 70 and the case 20 may be appropriately adjusted, and the mutual fastening force may be further increased.

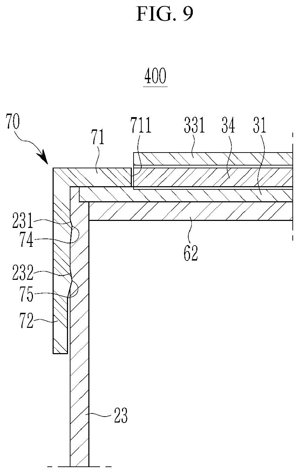

FIG. 9 shows a partial cross-sectional view of an enlarged state in which a housing member is combined to a case in a rechargeable battery according to a fourth embodiment of the present invention. Referring to FIG. 7 and FIG. 9, regarding a rechargeable battery 400 according to a fourth embodiment, the case 23 includes a plurality of combining grooves 231 and 232 corresponding to the undercuts 74 and 75 on the external surface.

The combining grooves 231 and 232 include an upper combining groove 231 and a lower combining groove 232 corresponding to the upper undercut 74 and the lower undercut 75. That is, the upper combining groove 231 has a depth and a slope corresponding to the first slope 741 and the second slope 742 of the upper undercut 74 and is formed on the upper side of the external surface of the case 23. The lower combining groove 232 has a depth and a slope corresponding to the third slope 753 and the fourth slope 754 of the lower undercut 75 and is formed on the lower portion of the external surface of the case 23.

Therefore, the upper and lower undercuts 74 and 75 of the housing member 70 may be easily combined to the upper and lower combining grooves 231 and 232 of the case 23. The combination of the upper and lower undercuts 74 and 75 and the upper and lower combining grooves 231 and 232 may further increase the fastening force of the lateral portion 72 of the housing member 70 and the case 23 compared to the third embodiment. When the rechargeable battery 400 is inserted into the set, the phenomenon that the housing member 70 leaves the case 23 may be further prevented compared to the third embodiment.

While this invention has been described in connection with what is presently considered to be practical embodiments, it is to be understood that the invention is not limited to the disclosed embodiments, but, on the contrary, is intended to cover various modifications and equivalent arrangements included within the scope of the appended claims.

**<Description of symbols>**

| | | | |
|---|---|---|---|
| 10: | electrode assembly | 11: | first electrode (negative electrode) |
| 12: | second electrode (positive electrode) | 13: | separator |
| 14: | insulating sheet | 20, 22, 23: | case |
| 21: | opening | 30: | cap assembly |
| 31: | cap plate | 33: | terminal plate |
| 34: | thermally fused member | 40, 70: | housing member |
| 41: | planar portion | 42, 72: | lateral portion |
| 43, 74, 75: | undercut | 51: | first electrode tab |
| 52: | second electrode tab | 62: | insulating member |
| 100, 200, 300, 400: | rechargeable battery | 101: | first end (lower end side) |
| 102: | second end (upper end side) | 311: | terminal hole |
| 221, 231, 232: | combining groove | 331: | flange portion |
| 332: | tab connector | 341, 411, 711: | through-hole |
| 621: | through-hole | 741: | first slope |
| 742: | second slope | 743: | maximum protruding line |
| 753: | third slope | 754: | fourth slope |
| 756: | maximum protruding line | | |

## Claims

1. A rechargeable battery comprising:
a case (20) receiving an electrode assembly and including an opening;
a cap assembly (30) including a cap plate (31) combined to the case and covering the opening and a terminal plate (33) combined to the cap plate; and
a housing member (40, 70) covering the cap plate on an external side of the terminal plate and combined to the case,
wherein the housing member includes an undercut (43, 74, 75) formed toward an external surface of the case.

2. The rechargeable battery of claim 1, wherein
the undercut (43) becomes gradually thicker while going to a lower end of an internal side of the housing member from an upper end thereof.

3. The rechargeable battery of claim 1 or 2, wherein
the case (20) is provided with a combining groove(221) corresponding to the undercut (43) on an external surface of the case.

4. The rechargeable battery of claim 3, wherein
the combining groove (221) becomes gradually deeper while going to a lower end of the external surface of the case from an upper end thereof.

5. The rechargeable battery of claim 1, wherein
the housing member (70) includes a plurality of undercuts (74, 75) in a lower end of the internal side of the housing member (70).

6. The rechargeable battery of claim 5, wherein
an upper undercut (74) among the plurality of undercuts has a first slope (741) formed from a maximum protruding line (743) toward a lower side with regard to the maximum protruding line and has a second slope (742) formed from the maximum protruding line (743) toward an upper side with regard to the maximum protruding line, and
the first slope (741) is formed to be gentler than the second slope (742).

7. The rechargeable battery of claim 5 or 6, wherein
the case (20) is provided with a plurality of combining grooves (231, 232) corresponding to the plurality of undercuts (74, 75) on the external surface.

8. The rechargeable battery of claim 7, wherein
an upper combining groove (231) among the combining grooves has a depth corresponding to the first slope (741) and the second slope (742) of the upper undercut (74) on the external surface of the case (20).

9. The rechargeable battery of any of claims 5 to 8, wherein
a lower undercut (75) among the plurality of undercuts (74, 75) has a third slope (753) formed from the maximum protruding line (756) toward a lower side with regard to the maximum protruding line and has a fourth slope (754) formed from the maximum protruding line (756) toward an upper side with regard to the maximum protruding line,
the third slope (753) is formed to be steeper than the first slope (741) and gentler than the second slope (742), and
the fourth slope (754) is steeper than the third slope (753) and gentler than the first slope (741).

10. The rechargeable battery of claim 9, wherein
a lower combining groove (232) from among the combining grooves has a depth corresponding to the third slope (753) and the fourth slope (754) of the lower undercut (75) on the external surface of the case.

11. The rechargeable battery of any of the preceding claims, wherein
the electrode assembly includes a first electrode (11), a second electrode (12), and a separator (13) disposed therebetween,
the case (20) is connected to the first electrode by a first electrode tab (51), and
the terminal plate is connected to the second electrode by a second electrode tab (51).

12. The rechargeable battery any of the preceding claims, wherein
the cap plate (31) is electrically connected to the case (20), and
the cap plate (31) and the terminal plate are thermally fused by a thermally fused member disposed therebetween and are electrically insulated from each other.

13. The rechargeable battery of any of the preceding claims, wherein
the terminal plate (33) includes:
a flange portion (331) disposed outside the cap plate and attached to an external surface of the cap plate in an electrically insulated way; and
a protrusion end protruding to an inside from the flange portion, inserted into a terminal hole of the cap plate, and electrically connected to the second electrode tab on an internal surface.
